# EUROPÄISCHE PATENTANMELDUNG

(11) **EP 4 261 990 A1**
(43) Veröffentlichungstag der Anmeldung: **18.10.2023**
(21) Anmeldenummer: 23157394.0
(22) Anmeldetag: 17.02.2023
(51) Int. Cl.: H01M 50/20, H01M 50/204, H01M 50/51, H01M 50/512, H01M 50/514, H01G 9/26, H02J 7/00

(54) **ENERGIESPEICHER**

(30) Priorität: 18.02.2022 DE 102022103959; 26.07.2022 DE 102022118757; 13.09.2022 DE 102022123384
(71) Anmelder: M&P Motion Control and Power Electronics GmbH, 01257 Dresden (DE)
(72) Erfinder: Peppel, Torsten, 01257 Dresden (DE)
(74) Vertreter: Schied, Sebastian

(57) **Zusammenfassung**

Die Aufgabe der Erfindung ist es daher, einen Energiespeicher mit einer erhöhten Verfügbarkeit und einer Umgehungslösung fehlerhafter Komponenten des Energiespeichers zu schaffen.

Energiespeicher, wobei der Energiespeicher zumindest ein Energiespeichermodul (1) mit in Serie geschalteten Energiespeicherzellen umfasst, wobei das zumindest eine Energiespeichermodule (1) in einem Rack (2) anordbar ist oder das ein, zwei oder mehr Energiespeichermodule (1) zumindest ein Rack (2) bilden, wobei zumindest zwei oder mehr der Energiespeichermodule (1) in einem Rack (2) oder als Rack (2) in Serie geschalten sind, wobei zumindest zwei Racks (2) einen Strang (3) bilden,
dadurch gekennzeichnet,
dass zumindest eines der Energiespeichermodule (1) eines ersten Racks (2) zu zumindest einem der Energiespeichermodule (1) zumindest eines zweiten Racks oder weiteren Racks (2) parallel geschalten ist.

## Beschreibung

Die Erfindung betrifft einen Energiespeicher im Mittelspannungsbereich, basierend auf Kondensatoren, vorzugsweise Doppellagenkondensatoren, oder auf aufladbaren Batterien.

Für Energiespeicher werden in zumindest einem Strang Energiespeichermodule in Serie geschaltet, wobei jeweils ein Energiespeichermodul eine Anzahl in Serie geschalteter Energiespeicherzellen, beispielsweise in Form von Einzelzellen umfasst, wobei diese beispielsweise Doppelschichtkondensator oder Lithium-Ion-Batterien sein können , umfasst. Je nach eingesetzten Energiespeicherzellen liegt die Zellspannung beispielsweise bei 2,5V bis 3V.

Die Energiespeichermodule lassen sich in Serie zu zumindest einem Strang oder beispielsweise in zumindest einem Rack zu zumindest einen Strang anordnen oder zusammenschalten. Ebenso lassen sich mehrere Racks in Serie zu zumindest einem Strang kombinieren oder zusammenschalten.

Ebenso ist eine parallele Kombination von Strängen oder Racks vorgesehen.

Ein Energiespeicher je nach Ausbaustufe umfassen als kleinste Einheit oder Speichereinheit zumindest ein Energiespeichermodul und/oder zumindest ein Rack mit zumindest einem Energiespeichermodul. Mehrere Energiespeichermodule können zu einer Überwachungseinheit, bspw. einem Rack zusammengefasst sein. Ein Rack kann eine physische Einheit, beispielsweise ein Schrank sein. Ebenso können die Energiespeichermodule auch ohne Rack gekoppelt oder zusammengefasst sein.

Im Niederspannungsbereich werden in Serie geschaltete Energiespeicherzellen über ein Monitoringsystem überwacht. Das Monitoringsystem umfasst unterschiedliche Überwachungskomponenten. Je Energiespeichermodul ist eine Modulüberwachungseinheit vorhanden. Die Modulüberwachungseinheit überwacht jede einzelne Energiespeicherzelle oder Gruppen von oder einer Vielzahl von Energiespeicherzellen des Energiespeichermodul zumindest hinsichtlich der Spannung und die Temperatur zumindest des Energiespeichermoduls. Eine Gruppe von Energiespeicherzellen kann auch alle Energiespeicherzellen eines Energiespeichermoduls umfassen.

Mehrere Racks können in Serie und/oder parallel zu einem Strang zusammengefasst werden.

Bei festgestellten Fehlern kann einfach abgeschaltet werden und es ist möglich mit Redundanzen, beispielsweise mit zumindest eines alternativen Stranges oder Racks oder Energiespeichermoduls, zu arbeiten. Dafür werden zusätzliche Speichereinheiten installiert.

Im Mittelspannungsbereich ist der Zugang zu dem System im geladenen Zustand jedoch nicht mehr möglich. Jeder Fehler der Überwachung ist als Abschaltgrund zu werten, da der Zustand des Energiespeichers nicht mehr bekannt ist. Ein Zuschalten oder Abschalten von Redundanzen oder ein Austausch von Komponenten ist damit in den meisten Fällen nicht wirtschaftlich möglich.

So führt der Ausfall von nur einem Energiespeichermoduls zum Ausfall eines Racks und/oder zum Ausfall eines gesamten Stranges. Damit kommt es je nach Ausbaustufe und/oder Spannungsbereich im Fehlerfall zu einem nicht unerheblichen Wartungsaufwand und zu einer schlechten Verfügbarkeit am Energiespeicher.

Für den Mittelspannungsbereich werden bei den gegebenen Zellspannungen eine sehr hohe Anzahl an Energiespeicherzellen benötigt. Dementsprechend ergibt sich ebenso eine Vielzahl an Energiespeichermodulen und an Racks. Durch die hohe Anzahl der Einzelkomponenten ist ein solcher Mittelspannungsspeicher sehr unzuverlässig, da bedingt durch die Vielzahl an Komponenten die Ausfallrate hoch ist.

Fehlersituationen können beispielsweise vorliegen, wenn eine Zelle hochohmig wird und der Stromfluss durch den Strang unterbrochen ist. Es kann weder geladen oder entladen werden. Wird versucht den Energiespeicher zu entladen verschieben sich nur die Potentiale der beiden getrennten Speicherteile; wird die Spannungsdifferenz über der Trennstelle zu hoch kommt es zum Durchschlag. Im folgendem kann sich ein leitender Kanal ausbilden, es wäre aber auch möglich, dass der Kondensator öffnet. Der Speicher muss in einer solchen Situation heruntergefahren werden. Wie beschrieben verschieben sich die Potentiale an der Trennstelle, da die Teilpotentiale nicht entladen werden, die Gesamtspannung aber durch das Entladen geringer wird. An der Fehlerstelle werden dann während des Entladens laufend Durchschläge erfolgen oder es bildet sich ein leitfähiger Kanal. Die Energie des gesamten Strangs muss durch die Fehlerstelle fließen. Dadurch erhöht sich die Brandgefahr.

Die Aufgabe der Erfindung ist es daher, einen Energiespeicher mit einer erhöhten Verfügbarkeit und einer Umgehungslösung fehlerhafter Komponenten des Energiespeichers zu schaffen.

Mit der Erfindung wird im angegebenen Anwendungsfall erreicht, dass ein Energiespeicher geschaffen wird, wobei der Energiespeicher zumindest ein Energiespeichermodul mit in Serie geschalteten Energiespeicherzellen umfasst, wobei das zumindest eine Energiespeichermodul in einem Rack anordbar ist. So können ein, zwei oder mehr Energiespeichermodule zumindest ein Rack bilden. Zumindest zwei oder mehr der Energiespeichermodule sind in einem Rack oder als Rack in Serie geschalten, wobei zumindest zwei Racks einen Strang bilden und zumindest eins der Energiespeichermodule eines ersten Racks zu zumindest einem der Energiespeichermodule zumindest eines zweiten Racks oder weiteren Racks parallel geschalten ist.

Vorteilhaft lassen sich zwei oder mehr Racks in Serie und/oder parallel zu einem Strang schalten oder kombinieren. Ebenso lassen sich zumindest zwei Stränge parallel schalten. Ein Vorteil der Erfindung liegt in einer zuverlässigen Betriebsweise des Energiespeichers und dessen Racks im Strang.

Die in einem Rack untergebrachten Energiespeichermodule können als eine Vielzahl von Energiespeichermodulen betrachtet werden oder zu einem Energiespeichermodul zusammengefasst sein.

Damit wird eine verzweigte und zugleich redundante Verschaltung von Energiespeichermodulen erreicht. Defekte oder nicht mehr voll funktionsfähige Energiespeichermodule lassen sich somit umgehen und damit die Verfügbarkeit des Energiespeichers erhöht oder zumindest erhalten wird. Damit ist es möglich, dass bei Ausfall oder im Fehlerfall eines Energiespeichermoduls keine Abschaltung des Energiespeicher notwendig wird oder zu erfolgen hat und sowohl das jeweilige Rack als auch der jeweilige Strang weiterbetrieben werden kann und nur das jeweilige betroffene Energiespeichermodul nicht mehr oder nur in begrenztem Umfang zur Verfügung steht. Eine Notabschaltung kann somit auf einen günstigen Zeitpunkt verschoben werden und kontrolliert erfolgen. Auch können zeitversetzt und/oder rackversetzt weitere Energiespeichermodule betroffen sein, ohne dass die Gesamtfunktion gefährdet ist oder der Energiespeicher abgeschaltet werden braucht. Die Verfügbarkeit wird erhöht, da Ausfälle eines Energiespeichermoduls durch die dazu parallel geschalteten Energiespeichermodule abgefangen oder ausbalanciert werden.

Ein fehlerbehaftetes Energiespeichermodul braucht, je nach Fehlerbild nicht unmittelbar abgeschaltet werden. Es kann in Abhängigkeit des Fehlers und der schaltungs- oder bauteilimmanenten Parameter in gegebenenfalls nicht mehr optimaler Nutzung weiterbetrieben werden.

Durch die erfindungsgemäße rackübergreifende Parallelschaltung der Energiespeichermodule kann der Strang auch bei einem fehlerhaften Unterstrang, also der seriellen Verschaltung oder Verbindung zwischen seriell aufeinander folgenden Racks, oder bei fehlerhaften Rack oder einer fehlerbehafteten Energiespeichermodulgruppe weiter genutzt werden. Es geht lediglich die Speicherfähigkeit einer Energiespeichermodulgruppe verloren oder ist reduziert.

Vorteilhaft wird weiterhin ein Ladungsausgleich zwischen den Energiespeichermodulen erreicht, so dass unterschiedliche Ladungszustände eines Energiespeichermoduls ebenfalls durch die parallel geschalteten Energiespeichermodule abgefangen oder ausbalanciert werden.

Vorteilhafte Ausgestaltungen der Erfindung sind in den Unteransprüchen dargestellt.

In einer Weiterbildung bildet zumindest eines der Energiespeichermodule in einem Rack eine Energiespeichermodulgruppe oder sind zwei oder mehr Energiespeichermodule in einem Rack in eine, zwei oder mehr Energiespeichermodulgruppen je Rack zusammengefasst oder zuordbar. Entsprechend der Weiterbildung ist zumindest eine der Energiespeichermodulgruppen des ersten Racks zu zumindest einer der Energiespeichermodulgruppen des zumindest zweiten oder weiteren Racks parallel geschaltet. Vorteilhaft lässt sich damit der Verschaltungsaufwand im Rack und zwischen den Racks reduzieren. Zudem werden durch eine Vielzahl von Energiespeichermodulen in einer Energiespeichermodulgruppe Toleranzen ausgeglichen und damit die Fehleranfälligkeit gemindert. Weiterhin kann in einem Fehlerfall ein gezielter Überspannungsschutz einzelner oder zusammengefasster Energiespeichermodule erfolgen. Vorzugsweise sind die Energiespeichermodulgruppen jeweils gleich groß. Andere oder weitere Unterteilungen oder Bildungen von Energiespeichermodulgruppen innerhalb eines Racks mit jeweils unterschiedlicher Anzahl an Energiespeichermodulen sind jedoch auch möglich. Ebenso kann eine Unterteilung oder Aufteilung der Energiespeichermodule in weitere Energiespeichermodulgruppen erfolgen, so dass die Energiespeichermodule auch in drei, vier oder mehr Energiespeichermodulgruppen je Rack aufteilbar oder zuordbar sind. Ebenso kann ein Energiespeichermodul für sich bereits eine Energiespeichermodulgruppe bilden

In einer Weiterbildung sind die Energiespeichermodule im jeweiligen Rack in zwei Energiespeichermodulgruppen als Rackhälften zusammengefasst, wobei jeweils eine erste der zwei Energiespeichermodulgruppen oder jeweils eine erste Rackhälfte der jeweiligen Racks und jeweils eine zweite der zwei Energiespeichermodulgruppen oder zweite Rackhälfte der jeweiligen Racks rackübergreifend parallel geschaltet sind. So kann beispielsweise die Bildung der Energiespeichermodulgruppen hälftig je Rack erfolgen , so dass die Energiespeichermodule in einem Rack beispielsweise die erste Energiespeichermodulgruppe im oberen Teil und die zweite Energiespeichermodulgruppe im unteren Teil des Racks aufgeteilt oder zugeordnet ist. Vorzugsweise sind die Energiespeichermodulgruppen der Rackhälften gleich groß.

Vorteilhaft sind die Energiespeichermodule oder die Energiespeichermodulgruppen des ersten Racks zur Reduzierung des Schaltungaufwandes über zumindest eine Querverbindung mit den Energiespeichermodulen oder Energiespeichermodulgruppen des zumindest zweiten oder weiteren Racks verbunden oder parallel geschalten.

Vorteilhaft ist zur weiteren Reduzierung des Schaltungaufwandes die zumindest eine Querverbindung außerhalb des jeweiligen Racks angeordnet und/oder ist die zumindest eine Querverbindung außerhalb des jeweiligen Racks mit zumindest einem Unterstrang zwischen zumindest zwei seriell verbundenen Racks verbunden. Somit lassen sich die Racks standardisiert konfigurieren und einfach kombinieren, ohne die innere Verkabelung aufwändig individuell anzupassen. Ebenso wäre ein Austausch eines Racks im Strang einfacher möglich.

Ein Ausführungsbeispiel der Erfindung ist in der Zeichnung dargestellt und wird im Folgenden näher beschrieben. Es zeigt:

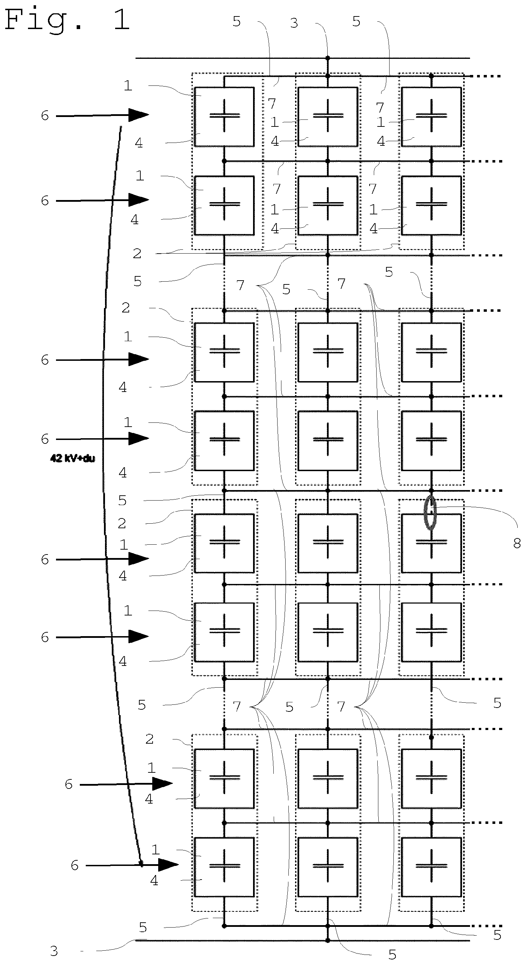

Fig. 1 eine schematische Darstellung eines Energiespeichers mit jeweils in Serie geschalteten Racks, die jeweils Unterstränge bilden, die zusammen einen Strang bilden, wobei je Rack zwei Energiespeichermodulgruppen vorhanden sind und jeweils die Energiespeichermodulgruppen einer Rackebene oder Rackhälfte rackübergreifend bzw. unterstrangübergreifend parallel geschalten sind.

In der Figur 1 ist Energiespeicher mit der erfindungsgemäßen Parallelschaltung der Energiespeichermodule 1 oder Energiespeichermodulgruppen 4 dargestellt, wobei in den jeweiligen konkreten Beispielen die Racks 2 zunächst jeweils in Serie geschalten und drei parallele Unterstränge 5 bilden, die zusammen einen gemeinsamen Strang 3 bilden. Die drei parallelen Unterstränge 5 können im Bereich zwischen den jeweils seriell aufeinander folgenden und jeweils parallel geschalteten Racks 2 auch zu einem gemeinsamen Unterstrang 5 zusammengefasst sein (nicht dargestellt). Je Rack 2 sind zwei im jeweiligen Rack 2 seriell verbundene Energiespeichermodulgruppen 4 vorhanden. Jeweils die Energiespeichermodulgruppen 4 die in Bezug auf die im parallelen Unterstrang 5 benachbarten Racks 2, im konkreten Beispiel in einer Rackebene 6 oder Rackhälfte 6 oder in Bezug auf die rackinterne serielle Verschaltung in der jeweiligen Reihenfolge parallel benachbart angeordnet sind, sind über eine Querverbindung 7 rackübergreifend bzw. unterstrangübergreifend parallel geschalten. Je nach Lage der Querverbindung 7 im Unterstrang 5 sind die Querverbindung 7 und der Unterstrang 5 eine Verbindung. Dies ist beispielsweise beim jeweiligen Übergang zum Strang 3, in der Figur 1 jeweils oben und unten bei den Zuleitungen vom Strang 3 zu den Racks 2 gegeben.
Zusätzlich ist eine Querverbindung 7 jeweils zwischen den Energiespeichermodulgruppen 4 eines Racks 2 und/oder zwischen den Räckhälften 6 zu den parallel benachbarten Racks 2 jeweils zwischen die Energiespeichermodulgruppen 4 und/oder zu den Räckhälften 6 vorhanden.

Kommt es, wie in Figur 1 beispielhaft dargestellt, zu einer Auftrennung 8 oder Fehlstelle 8, erlaubt es die parallele Verschaltung der Energiespeichermodule 1 oder Energiespeichermodulgruppen 4 der in parallelen Untersträngen 5 darin seriell angeordneten Racks 2, dass der Betrieb des Energiespeichers aufrechterhalten bleibt und die Energie über die kombinierte parallele und serielle Verschaltung der Energiespeichermodule 1 und Energiespeichermodulgruppen 4 im entsprechenden Umfang an der Auftrennung 8 oder Fehlstelle 8 vorbei geleitet oder mit den verbliebenen Energiespeichermodule 1 und Energiespeichermodulgruppen 4 ausgeglichen wird.

### Zusammenstellung der Bezugszeichen

1 - Energiespeichermodul
2 - Rack
3 - Strang
4 - Energiespeichermodulgruppe
5 - Unterstrang
6 - Rackebene, Rackhälfte , Überladungsschutzschaltung, Spannungsüberwachung, Drosselwandlerschaltung
7 - Querverbindung
8 - Auftrennung, Fehlstelle

## Patentansprüche

1. Energiespeicher, wobei der Energiespeicher zumindest ein Energiespeichermodul (1) mit in Serie geschalteten Energiespeicherzellen umfasst, wobei das zumindest eine Energiespeichermodule (1) in einem Rack (2) anordbar ist oder das ein, zwei oder mehr Energiespeichermodule (1) zumindest ein Rack (2) bilden, wobei zumindest zwei oder mehr der Energiespeichermodule (1) in einem Rack (2) oder als Rack (2) in Serie geschalten sind, wobei zumindest zwei Racks (2) einen Strang (3) bilden,
**dadurch gekennzeichnet,**
**dass** zumindest eines der Energiespeichermodule (1) eines ersten Racks (2) zu zumindest einem der Energiespeichermodule (1) zumindest eines zweiten Racks oder weiteren Racks (2) parallel geschalten ist.

2. Überspanungsschutzsystem nach Anspruch 1,
**dadurch gekennzeichnet,**
**dass** zumindest eines der Energiespeichermodule (1) in einem Rack (2) eine Energiespeichermodulgruppe (4) bildet oder dass zwei oder mehr Energiespeichermodule (1) in einem Rack (2) in eine, zwei oder mehr Energiespeichermodulgruppen (4) je Rack (2) zusammengefasst oder zuordbar sind, wobei zumindest eine der Energiespeichermodulgruppen (4) des ersten Racks (2) zu zumindest einer der Energiespeichermodulgruppen (4) des zumindest zweiten oder weiteren Racks (2) parallel geschaltet ist.

3. Überspanungsschutzsystem Anspruch 2,
**dadurch gekennzeichnet,**
**dass** die Energiespeichermodule (1) im jeweiligen Rack (2) in zwei Energiespeichermodulgruppen (4) als Rackhälften (6) zusammengefasst sind, wobei jeweils eine erste der zwei Energiespeichermodulgruppen (4) oder jeweils eine erste Rackhälfte (6) der jeweiligen Racks (2) und jeweils eine zweite der zwei Energiespeichermodulgruppen (4) oder zweite Rackhälfte (6) der jeweiligen Racks (2) rackübergreifend parallel geschaltet sind.

4. Überspanungsschutzsystem nach einem der vorhergehenden Ansprüche,
**dadurch gekennzeichnet,**
**dass** die Energiespeichermodule (1) oder die Energiespeichermodulgruppen (4) des ersten Racks (2) über zumindest eine Querverbindung (7) mit den Energiespeichermodulen (1) oder Energiespeichermodulgruppen (4) des zumindest zweiten oder weiteren Racks (2) verbunden oder parallel geschalten sind.

5. Überspanungsschutzsystem nach einem der vorhergehenden Ansprüche,
**dadurch gekennzeichnet,**
**dass** die zumindest eine Querverbindung (7) außerhalb des jeweiligen Racks (2) angeordnet ist und/oder dass die zumindest eine Querverbindung (7) außerhalb des jeweiligen Racks (2) mit einem Unterstrang (5) zwischen zumindest zwei seriell verbundenen Racks (2) verbunden ist.
